# EUROPEAN PATENT SPECIFICATION

(11) **EP 4 606 702 B1**
(45) Date of publication and mention of the grant of the patent: **09.09.2026**
(21) Application number: 24215130.6
(22) Date of filing: 25.11.2024
(51) Int. Cl.: B64C 27/605

(54) **ROTOR ASSEMBLY AND AIR MOBILITY APPARATUS INCLUDING SAME**
ROTORANORDNUNG UND LUFTMOBILITÄTSVORRICHTUNG DAMIT
ENSEMBLE ROTOR ET APPAREIL DE MOBILITÉ D'AIR LES COMPRENANT

(30) Priority: 20.02.2024 KR 20240024375
(43) Date of publication of application: 27.08.2025
(73) Proprietor: Hyundai Motor Company, Seoul 06797 (KR); Kia Corporation, Seocho-gu Seoul 06797 (KR)
(72) Inventor: CHOI, Jae Young, Seoul (KR)
(74) Representative: Viering, Jentschura & Partner mbB Patent- und Rechtsanwälte

(56) References cited:
- WO-A1-2007/021096
- GB-A- 1 081 341
- JP-A- 2008 019 770
- KR-A- 20080 021 315
- US-A1- 2017 057 629

## Description

### TECHNICAL FIELD

The present disclosure relates to a rotor assembly and air mobility apparatus including the same.

### BACKGROUND

The air mobility industry has attracted attention as a future transportation method which may solve urban population growth, road traffic congestion, and environmental problems.

Air mobility may provide transportation within urban areas using an electric vertical takeoff and landing aircraft (eVTOL).

Differently from a general aircraft, an eVTOL may have vertical takeoff and landing capabilities, such that an eVTOL may safely takeoff and land even within urban areas, without using a runway, and may provide convenient urban accessibility, similar to a passenger car.

Also, an eVTOL may be environmentally friendly, by using electrical energy, for example.

The flight of the eVTOL may be controlled using collective pitch control and cyclic pitch control.

Collective pitch control may be used to control lifting, landing, and forward and backward movements of the eVTOL by changing pitch angles of rotor blades equally, and may control thrust of the eVTOL.

Cyclic pitch control may be used to control turning, such as turning left and right of an eVTOL by changing pitch angles of rotor blades to the left and right, and may control lift of the eVTOL.

From e.g. US 2017 / 0 057 629 A1 a rotor assembly for an aircraft is known, comprising: A main shaft, blades extending from the main shaft, a swash plate, penetrated by the main shaft and configured to move along the main shaft, a blade link connecting the blades to the at least one swash plate and a position restoration unit.

Further, from e.g. GB 1 081 341 an apparatus for longitudinal stabilization of a rotorcraft is known. Finally, from each of e.g. KR 2008 0 021 315 A, JP 2008 019 770 A and WO 2007 / 021 096 A1 variable capacity compressors are known.

### SUMMARY

The present invention provides a rotor assembly with the features of claim 1 and an air mobility apparatus with the features of claim 7. Further preferred embodiments of the rotor assembly are described in the dependent claim.

These and other features and advantages are described in greater detail below.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective diagram illustrating an aircraft including a rotor assembly according to an example of the present disclosure;
FIG. 2 is a diagram illustrating a rotor assembly according to an example of the present disclosure;
FIG. 3 is a diagram illustrating a rotor assembly including a position restoration unit according to an example of the present disclosure;
FIG. 4 is a diagram illustrating a first use state of a rotor assembly including a position restoration unit according to an example of the present disclosure;
FIG. 5 is a diagram illustrating a second use state of a rotor assembly including a position restoration unit according to an example of the present disclosure;
FIG. 6 is a diagram illustrating a rotor assembly including a position restoration unit according to another example of the present disclosure; and
FIG. 7 is a diagram illustrating a rotor assembly including a position restoration unit according to another example of the present disclosure.

### DETAILED DESCRIPTION

Hereinafter, examples of the present disclosure will be described with reference to the attached drawings.

However, redundant descriptions and detailed descriptions of known functions and elements which may unnecessarily obscure the gist of the present disclosure will not be provided. In the drawings, components having similar/equivalent functions and application will be indicated by same reference numerals.

The terms "first," "second," and the like may be used to distinguish one element from the other, and may not limit a sequence and/or an importance, or others, in relation to the elements.

An expression used in the singular encompasses the expression of the plural, unless it has a clearly different meaning in the context. The terms, "include," "comprise," "is configured to," or the like of the description are used to indicate the presence of features, numbers, steps, operations, elements, portions or combination thereof, and do not exclude the possibilities of combination or addition of one or more features, numbers, steps, operations, elements, portions or combination thereof.

It will be understood that elements and structures described herein as performing certain actions are configured to perform said actions and do not need to be performing said actions at a given moment to be consistent with the present disclosure.

Unless otherwise indicated, the entirety of terms used herein, including technical or scientific terms, have the same meanings as those generally understood by those with ordinary knowledge in the field of art to which the present disclosure belongs. Such terms as those defined in a generally used dictionary are to be interpreted as having meanings equal to the contextual meanings in the relevant field of art, and are not to be interpreted as having ideal or excessively formal meanings unless clearly defined as having such in the present application.

The term "air mobility" or "air mobility apparatus" in examples may refer to a mobility vehicle which may move by flying in the air. That is, "air mobility" may refer to, for example, a helicopter, a drone, a fixed-wing airplane, etc. An "air mobility" may include vehicles configured to move on the ground using wheels or other landing gear or on water using water landing gear and flying while the wheels or other landing gear and/or water landing gear are lifted from the ground.

An air mobility may include a manned air mobility and an unmanned air mobility. The manned air mobility may include an aircraft controlled by a pilot and/or an aircraft that may operate autonomously.

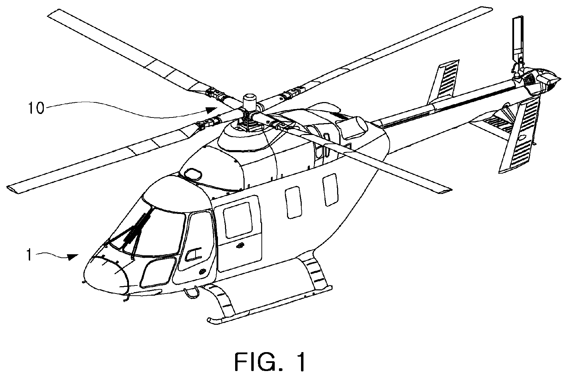

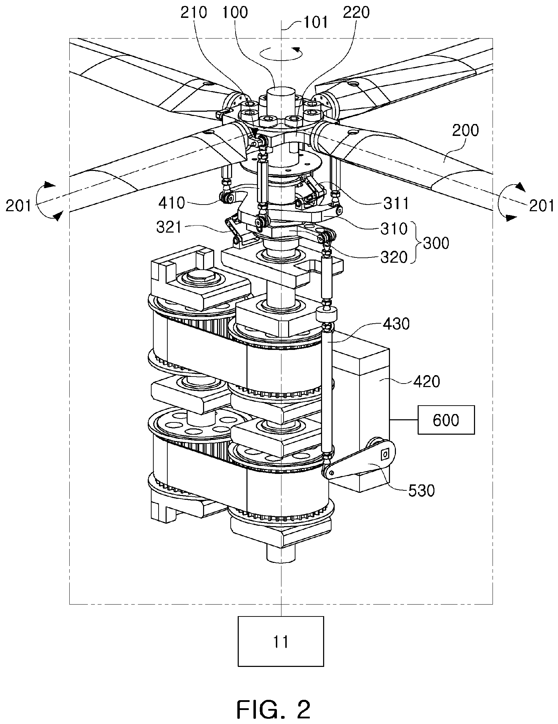

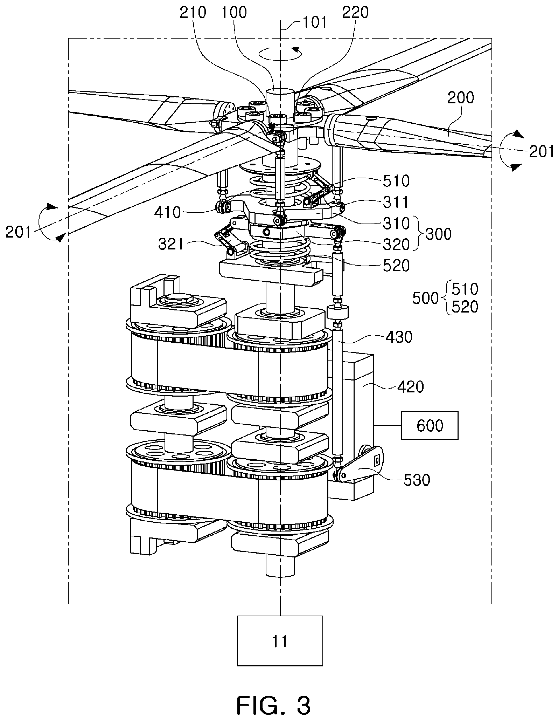

FIG. 1 is a perspective diagram illustrating an aircraft including a rotor assembly according to an example. FIG. 2 is a diagram illustrating a rotor assembly according to an example. FIG. 3 is a diagram illustrating a rotor assembly including a position restoration unit according to an example.

Referring to FIG. 1, the air mobility apparatus includes a rotor assembly 10 moving the aircraft 1 by generating lift by rotating the blades 200.

Referring to FIGS. 1 and 2, the rotor assembly 10 includes a main shaft 100, blades 200, a swash plate unit 300 (e.g., one or more swash plates, a swash plate), and a drive unit 420 (e.g., a drive).

One side of the main shaft 100 is connected to the air mobility apparatus, and may rotate by receiving driving force from the main drive unit 11 disposed on the aircraft 1. The main shaft 100 may rotate around a first shaft 101.

The plurality of blades 200 disposed along a circumference may be disposed on the other side of the main shaft 100.

The other side of the main shaft 100 may include a blade hub 220, the main shaft 100 and the blade 200 may be coupled to each other via the blade hub 220, and the blade 200 may rotate together with the main shaft 100 via the blade hub 220.

The blade 200 may be coupled to the blade hub 220 so as to rotate about a second shaft 201, wherein the second shaft 201 is a shaft of the blade 200 in the length direction of the blade 200.

Here, rotating the blade 200 in the direction of the second shaft 201 may be referred to as pitching.

The blade 200 may have an aerofoil-shaped cross-section, may be connected to the main shaft 100, may rotate together with the main shaft 100 which rotates around the first shaft 101, and/or may generate lift to the aircraft 1.

Also, or alternatively, by adjusting the pitching of the blade 200, a flight direction and/or a flight speed of the aircraft 1 may be adjusted.

The swash plate unit 300 may have a hollow shape. The main shaft 100 may penetrate the hollow region of the swash plate unit 300.

The swash plate unit 300 includes a first plate 310 and a second plate 320.

The first plate 310 rotates by being connected to the blade 200, and the second plate 320 is disposed below the first plate 310, supports the first plate 310, and does not rotate (differently from the first plate 310).

The first plate 310 is connected to the blade 200 and the blade link 410.

One side of the blade link 410 may be connected to the first plate 310, and the other side may be connected to the blade 200.

The blade link 410 may be connected to a protrusion 210 protruding from an external side of the blade 200.

The blade link 410 may be connected to the protrusion 210 of the blade 200, such that the blade link 410 may be spaced apart from the second shaft 201 disposed in the blade 200 by a predetermined distance and may be connected to the blade 200.

As the second shaft 201 is separated and the blade 200 and the blade link 410 are connected to each other, the first plate 310 may be lifted, such that the blade 200 may rotate around the second shaft 201 by the blade link 410 which moves up together with the first plate 310, and the pitch of the blade 200 may be adjusted.

The blade link 410 may be disposed (e.g., provided/configured/positioned, herein) to correspond to the number of blades 200, and the blade link 410 may be disposed on and connected to the first plate 310 to correspond to the arrangement of the plurality of blades 200.

Also, or alternatively, the blade hub 220 and the first plate 310 may be connected to a first auxiliary link 311.

The first auxiliary link 311 may change in response to changes in a distance between the blade 200 and the first plate 310, and may synchronize rotations of the blade 200 or the blade hub 220 and the first plate 310.

For example, the first auxiliary link 311 may include two links connected to perform relative rotation.

If the swash plate unit 300 moves up and the distance between the first plate 310 and the blade 200 reduces, an angle between the two links included in the first auxiliary link 311 may decrease, and the first plate 310 and the blade 200 may be connected to each other.

Also, or alternatively, if the swash plate unit 300 moves down and the distance between the first plate 310 and the blade 200 increases, the angle between the two links included in the first auxiliary link 311 may increases and the first plate 310 and the blade 200 may be connected to each other.

Accordingly, the first plate 310 and the blade 200 may rotate at the same speed regardless of a level of the swash plate unit 300, and the pitch of the blade 200 may change by the blade link 410 depending on the level of the swash plate unit 300.

The second plate 320 may include a second auxiliary link 321 connected to a non-rotating portion (e.g., a component, of the aircraft 1 and/or of the rotor assembly 10, that is configured not to rotate relative to the main body of the aircraft 1 when installed in the aircraft) separated from the main shaft 100 and fixed without rotating among the components of the aircraft 1 or the rotor assembly.

The second auxiliary link 321 may support the first plate 310 to not rotate even if the first plate 310 rotates.

For example, the second auxiliary link 321 may include two links connected to perform relative rotation.

If the swash plate unit 300 moves up, the angle between the two links included in the second auxiliary link 321 may increase, and the second plate 320 and aircraft 1 or the non-rotating portion may be connected to each other.

If the swash plate unit 300 moves down, the angle between the two links included in the second auxiliary link 321 may increase, and the level of the second plate 320 may be adjusted together with the first plate 310 while supporting the first plate 310.

The first auxiliary link 311 and the second auxiliary link 321 may support the first plate 310, which rotates (e.g., is rotatable relative to the main shaft) and the second plate 320, which does not rotate in an auxiliary manner (e.g., the second plate may be configured not to rotate relative to an aircraft 1 on which the rotor/rotor assembly 10 is installed), such that load on the blade link 410, which connects the first plate 310 to blade 200, and the control link 430, which connects the second plate 320 to drive unit 420 may be reduced.

The drive unit 420 may be connected to the second plate 320 of the swash plate unit 300, and may adjust the level of the second plate 320.

The drive unit 420 may be connected to the second plate 320 of the swash plate unit 300 and the control link 430, and by moving the control link 430 up or down, the level of the swash plate unit 300 including the second plate 320 and the first plate 310 supported by the second plate 320 may be adjusted.

The drive unit 420 may be configured as a rotary actuator or a linear actuator.

For example, the drive unit 420 may be configured as a rotary actuator such as a servo motor, stepper motor, or geared motor, or an electric linear actuator such as a ball screw actuator, linear motor, or linear spring actuator.

Referring to FIG. 3, the rotor assembly 10 according to an example may further include a position restoration unit 500.

The position restoration unit 500 may include a first elastic body 510 disposed above the swash plate unit 300 and a second elastic body 520 disposed below the swash plate unit 300.

The first elastic body 510 and the second elastic body 520 may be configured as coil-shaped springs.

The first elastic body 510 may be disposed above the first plate 310 in a state in which the main shaft 100 passes through a center of the coil, and the second elastic body 520 may be disposed below the second plate 310 in a state in which the main shaft 100 passes through a center of the coil.

The first elastic body 510 may generate restorative force from a region above the first plate 310 in a direction of the second plate 320, and the second elastic body 520 may generate restorative force from a region below the second plate 320 in a direction of the first plate 310.

In other words, the first elastic body 510 and the second elastic body 520 may generate restorative force in opposite directions.

If a failure occurs in the drive unit 420, the blade 200 may not be fixed/controlled by the drive unit 420, and an angle of the blade 200 may change due to external force acting through the blade 200, such that the blade 200 may be uncontrollable.

Here, the first elastic body 510 and the second elastic body 520 may generate restorative force in opposing directions and may assist the swash plate unit 300 to maintain a predetermined position, thereby maintaining the angle of the blade 200 to be constant.

For example, if the swash plate unit 300 tries to move up due to external force acting through the blade 200, the first elastic body 510 may be compressed by the swash plate unit 300 and may generate larger restorative force such that the swash plate unit 300 having moved up may move down.

Also, or alternatively, if the swash plate unit 300 tries to move down due to external force acting through the blade 200, the second elastic body 520 may be compressed by the swash plate unit 300 and may generate larger restorative force such that the swash plate unit 300 having moved up may move up.

In other words, the swash plate unit 300 may be maintained at a restorative position SL1 by restorative forces acting in opposite directions to each other, generated from the first elastic body 510 disposed above the swash plate unit 300 and the second elastic body 520 disposed. The restorative position SL1 may be a position where the restorative forces from the first elastic body 510 and the second elastic body 520 (and, e.g., a weight of the swash plate unit 300) are balanced.

Here, in consideration of a self-weight of the swash plate, an elastic modulus of the second elastic body 520 may be configured to be larger than an elastic modulus of the first elastic body 510, or a length of the second elastic body 520 may be formed to be longer than a length of the first elastic body 510.

Referring back to FIG. 2, the control unit 600 may be implemented by a nonvolatile memory (not illustrated) configured to store data regarding an algorithm configured to control operations of a component for adjusting the pitch angle of the blade or software instructions for reproducing the algorithm, and a processor configured to perform operations described below using data stored in the memory (not illustrated).

Here, the memory and the processor may be implemented as individual chips. Alternatively, the memory and the processor may be implemented in an integrated single. The processor may include one or more processors.

Also, the control unit 600 may transmit data to and receive data from the drive unit 420 using a communication means such as Ethernet, media oriented systems transport (MOST), Flexray, Internet, long term evolution (LTE), 5th generation mobile telecommunication (5G) Wi-Fi, Bluetooth, near field communication (NFC), Zigbee^{®}, radio frequency (RF), or the like.

The control unit 600 may operate the drive unit 420 according to operation from a user or a predetermined command.

For example, the control unit 600 may control the pitch angle of the blade 200 according to manipulation of a handle disposed on the aircraft 1 by a user, such that the drive unit 420 may be controlled to the aircraft to move up, move down, move forward, move reverse, change a direction or hover.

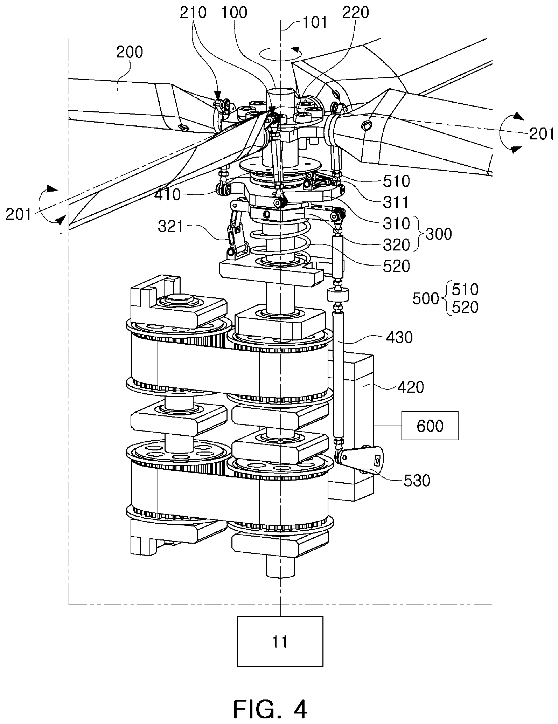

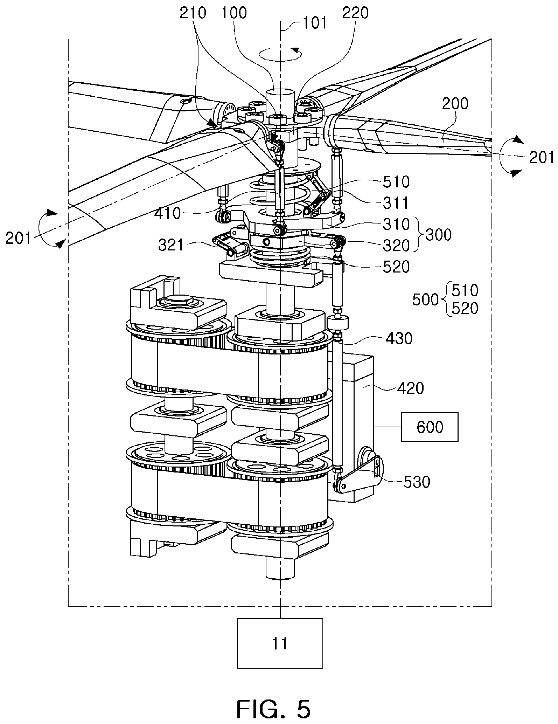

FIG. 4 is a diagram illustrating a first use state of a rotor assembly 10 including a position restoration unit 500 according to an example. FIG. 5 is a diagram illustrating a second use state of a rotor assembly 10 including a position restoration unit 500 according to an example.

A pitch angle of the blade 200 for stable horizontal flight may vary depending on air mobility, and an optimal pitch angle of the blade 200 may be restored by adjusting a first elastic body 510 and a second elastic body 520.

For example, as illustrated in FIG. 4, by forming the second elastic body 520 to have a length longer than that of the first elastic body 510, or by applying the second elastic body 520 having an elastic modulus higher than that of the first elastic body 510, the restorative position SL2 of the swash plate unit 300 may move up by the first elastic body 510 and the second elastic body 520.

Differently from the above example, as illustrated in FIG. 5, by forming the first elastic body 510 to have a length longer than that of the second elastic body 520 or by applying the first elastic body 510 having an elastic modulus higher than that of the second elastic body 520, the restorative position SL3 of the swash plate unit 300 may move down by the first elastic body 510 and the second elastic body 520.

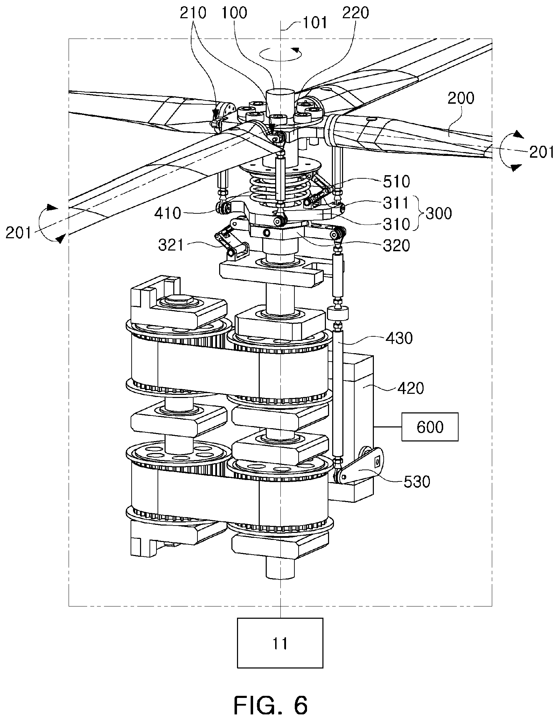

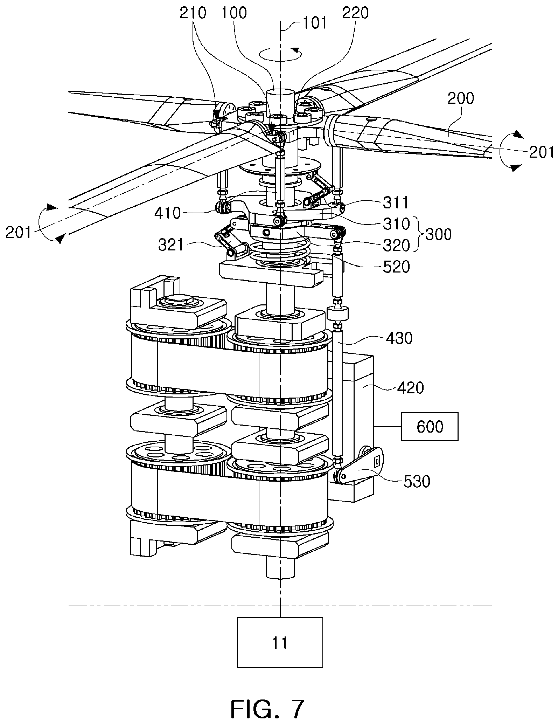

FIG. 6 is a diagram illustrating a rotor assembly 10 including a position restoration unit 500 according to another example. FIG. 7 is a diagram illustrating a rotor assembly 10 including a position restoration unit 500 according to another example.

Referring to FIGS. 6 and 7, the position restoration unit 500 may include one of a first elastic body 510 or a second elastic body 520 disposed on one of portions above or below the swash plate unit 300.

If the elastic body is disposed above or below the swash plate unit 300 as illustrated in FIGS. 3 to 5, the swash plate unit 300 and the first elastic body 510 or the second elastic body 520 may or may not be coupled to each other. The first elastic body 510 disposed in an upper portion and the second elastic body 520 disposed in a lower portion may generate restorative force in opposite directions, such that the swash plate unit 300 may be disposed in restorative positions SL1, SL2, and SL3 (e.g., depending on relative lengths/elastic moduli/material properties of the first elastic body 510 and the second elastic body 520).

Both ends of the first elastic body 510 or the second elastic body 520 in FIGS. 6 and 7 may need to be coupled to the rotor assembly 10 by welding or a coupling means.

Referring to FIG. 6, one end of the first elastic body 510 may be fixed to the first plate 310, and the other end of the first elastic body 510 may be fixed to the blade hub 220.

Referring to FIG. 7, one end of the second elastic body 520 may be fixed to the second plate 320, and the other end of the second elastic body 520 may be coupled to a portion of a non-rotating portion (e.g., a component, of the aircraft 1 and/or of the rotor assembly 10, that is configured not to rotate relative to the main body of the aircraft 1 when installed in the aircraft).

As both ends are fixed in either cases of FIG. 6 or FIG. 7, one end of the first elastic body 510 or the second elastic body 520 may move together with the swash plate unit 300, and may compress or tension the first elastic body 510 or the second elastic body 520, thereby generating restorative force.

In the case in which both ends are not fixed (e.g., one or more ends are not fixed), the first elastic body 510 or the second elastic body 520 may generate restorative force based on being compressed (e.g., if compressed and/or only if compressed), and would thus not work as the position restoration unit 500 consistently.

For example, if the swash plate unit 300 moves up, the first elastic body 510 may be compressed such that the swash plate unit 300 may be restored to move down, but if the swash plate unit 300 moves down, restorative force may not be generated.

Similarly, if the swash plate unit 300 moves down, the second elastic body 520 may be compressed such that the swash plate unit 300 may be restored to move up, if the swash plate unit 300 moves up, restorative force may not be generated.

The rotor assembly 10 according to an example may include a position restoration unit 500, such that, if a failure occurs in the drive unit 420 for controlling the pitch angle, the pitch angle of the blade 200 may not change and may be fixed to be consistent, such that thrust by the blade 200 may be maintained to be constant and stability may thus be improved.

The methods according to the present disclosure may be implemented in the form of program instructions executed through various computer means and recorded on a computer-readable medium. A computer-readable medium may include program instructions, data files, data structures alone or in combination. Program instructions recorded on a computer-readable medium may be specially designed and constructed for the present disclosure or may be well-known and usable by a person skilled in the computer software art.

Examples of computer-readable media may include a hardware device specially configured to store and execute program instructions, such as a ROM, RAM, flash memory, or the like. Examples of program instructions may include machine language code, which may be created by a compiler, and also high-level language code which may be executed by a computer using an interpreter. The above-described hardware device may be configured to operate with at least one software module to perform operations of the present disclosure, and vice versa.

An aspect of the present disclosure relates to a rotor assembly and air mobility which may, even if/when a failure in a drive unit for controlling a pitch of a blade, ensure stability by maintaining the pitch angle of the blade.

According to an example of the present disclosure, a rotor assembly includes a main shaft including blades disposed along a circumference; a swash plate unit disposed to be penetrated by the main shaft and configured to move up and down along the main shaft; a blade link connecting the blade to the swash plate unit; and a position restoration unit disposed above and below the swash plate unit and configured to adjust a position of the swash plate.

A position restoration unit may include a first elastic body disposed above the swash plate unit; and a second elastic body disposed below the swash plate unit.

The first elastic body and the second elastic body may generate restorative force in opposite directions.

The first elastic body and the second elastic body may generate restorative force in a direction opposite to a moving direction of the swash plate unit.

In the first elastic body and the second elastic body, the swash plate unit may be disposed in a predetermined restorative position.

The restorative position may be adjusted according to lengths and elastic moduli of the first elastic body and the second elastic body.

According to another example of the present disclosure, a rotor assembly includes a main shaft; at least one blade disposed along a circumference of the main shaft; a swash plate unit disposed to penetrate the main shaft, connected to at least one of the blades, and configured to move along the main shaft; a drive unit providing power to adjust a position of the swash plate unit; and a position restoration unit configured to restore the swash plate unit.

A rotation angle of the blade may be adjusted depending on a position of the swash plate unit.

The drive unit may be driven using electrical energy.

The position restoration unit may further include a first elastic body disposed above the swash plate unit, and a length of the first elastic body may change depending on a position of the swash plate unit.

One end of the first elastic body may be fixed to a portion above the swash plate unit, and the other end may be disposed on one end of the main shaft and may be fixed to a blade hub connecting the blade to the main shaft.

The position restoration unit may further include a second elastic body disposed below the swash plate unit, and a magnitude or a direction of restorative force of the second elastic body may change depending on a position of the swash plate unit.

The second elastic body may be fixed to a portion below the swash plate unit, and the other end may be fixed to a non-rotating portion configured to be separated from the main shaft and to not rotate.

In a non-claimed example, a further rotor assembly, may comprise: a main shaft; at least one blade extending from a side of the main shaft; at least one swash plate that is: penetrated by the main shaft, connected to at least one of the at least one blade, and configured to move along the main shaft; a drive configured to provide power to adjust a position of the at least one swash plate; and a position restoration unit configured to restore the at least one swash plate.

In a non-claimed example, a rotation angle of the blade is configured to be adjusted based on a position of the at least one swash plate.

In a non-claimed example, one end of the first elastic body is fixed to a portion of the at least one swash plate, and the other end is fixed to a blade hub connecting a blade of the at least one blade to the main shaft.

In a non-claimed example, the position restoration unit further comprises a second elastic body positioned at a second side of the at least one swash plate, and wherein a magnitude or a direction of a restorative force of the second elastic body is based on a position of the at least one swash plate.

In a non-claimed example, one end of the second elastic body is fixed to a portion of the at least one swash plate, and the other end of the second elastic body is fixed to a component of the rotor assembly configured to be separated from the main shaft and to not rotate relative to a body of an aircraft if the rotor assembly is installed in the aircraft.

## Claims

1. A rotor assembly (10) for an air mobility apparatus (1) and configured to move the air mobility apparatus (1) by generating lift by rotating blades (200), the rotor assembly (10) comprising:
a main shaft (100) being connected to the air mobility apparatus (1) and comprising a circumferential side;
the blades (200) extending from the circumferential side;
a swash plate unit (300), penetrated by the main shaft (100), configured to move along the main shaft (100) and including a first plate (310) and a second plate (320), wherein the first plate (310) rotates by being connected to the blades (200) and the second plate (320) is disposed below the first plate (310), supports the first plate (310), and does not rotate;
a blade link (410) connecting the blades (200) to the first plate (310); and
a position restoration unit (500), including a first elastic body (510) disposed, along the main shaft (100), above the swash plate unit (300) and a second elastic body (520) disposed, along the main shaft (100), below the swash plate unit (300) and configured to adjust a position of the swash plate unit (300).

2. The rotor assembly (10) of claim 1, wherein the first elastic body (510) and the second elastic body (520) are configured to generate restorative forces in opposite directions.

3. The rotor assembly (10) of claim 1 or 2, wherein the first elastic body (510) and the second elastic body (520) are configured to generate a restorative force in a direction opposite to a moving direction of the swash plate unit (300).

4. The rotor assembly (10) of one of claims 1-3, wherein the first elastic body (510) and the second elastic body (520) are configured to maintain the swash plate unit (300) at a predetermined restorative position along the main shaft (100).

5. The rotor assembly (10) of claim 4, wherein the restorative position is based on lengths and elastic moduli of the first elastic body (510) and the second elastic body (520).

6. The rotor assembly (10) of one of claims 1-5, further comprising a drive unit (420) configured to provide power to adjust a position of the swash plate unit (300).

7. An air mobility apparatus (1) comprising a rotor assembly of one of claims 1-6.

## Patentansprüche

1. Eine Rotoranordnung (10) für ein Luftfahrzeug (1), die eingerichtet ist, um das Luftfahrzeug (1) durch Erzeugen von Auftrieb mittels rotierender Blätter (200) zu bewegen, wobei die Rotoranordnung (10) aufweist:
eine Hauptwelle (100), die mit dem Luftfahrzeug (1) verbunden ist und eine Umfangsseite aufweist;
die Blätter (200), die sich von der Umfangsseite aus erstrecken;
eine Taumelscheibeneinheit (300), die von der Hauptwelle (100) durchdrungen wird, die eingerichtet ist, um sich entlang der Hauptwelle (100) zu bewegen, und die eine erste Platte (310) sowie eine zweite Platte (320) aufweist, wobei die erste Platte (310) durch eine Verbindung mit den Blättern (200) rotiert und die zweite Platte (320) unterhalb der ersten Platte (310) angeordnet ist, die erste Platte (310) stützt und nicht rotiert;
eine Blattverbindung (410), die die Blätter (200) mit der ersten Platte (310) verbindet; und
eine Positionsrückstelleinheit (500), die einen ersten elastischen Körper (510), der entlang der Hauptwelle (100) oberhalb der Taumelscheibeneinheit (300) angeordnet ist, und einen zweiten elastischen Körper (520) aufweist, der entlang der Hauptwelle (100) unterhalb der Taumelscheibeneinheit (300) angeordnet ist und eingerichtet ist, um eine Position der Taumelscheibeneinheit (300) einzustellen.

2. Die Rotoranordnung (10) gemäß Anspruch 1, wobei der erste elastische Körper (510) und der zweite elastische Körper (520) eingerichtet sind, um Rückstellkräfte in entgegengesetzte Richtungen zu erzeugen.

3. Die Rotoranordnung (10) gemäß Anspruch 1 oder 2, wobei der erste elastische Körper (510) und der zweite elastische Körper (520) eingerichtet sind, um eine Rückstellkraft in einer Richtung zu erzeugen, die der Bewegungsrichtung der Taumelscheibeneinheit (300) entgegengesetzt ist.

4. Die Rotoranordnung (10) gemäß einem der Ansprüche 1 bis 3, wobei der erste elastische Körper (510) und der zweite elastische Körper (520) eingerichtet sind, um die Taumelscheibeneinheit (300) an einer vorbestimmten Rückstellposition entlang der Hauptwelle (100) zu halten.

5. Die Rotoranordnung (10) nach Anspruch 4, wobei die Rückstellposition auf den Längen und Elastizitätsmodulen des ersten elastischen Körpers (510) und des zweiten elastischen Körpers (520) basiert.

6. Die Rotoranordnung (10) gemäß einem der Ansprüche 1 bis 5, ferner eine Antriebseinheit (420) aufweisend, die eingerichtet ist, um Leistung bereitzustellen, um eine Position der Taumelscheibeneinheit (300) einzustellen.

7. Ein Luftfahrzeug (1), das eine Rotoranordnung gemäß einem der Ansprüche 1 bis 6 aufweist.

## Revendications

1. Ensemble de rotor (10) pour un appareil de mobilité aérienne (1) et configuré pour déplacer l'appareil de mobilité aérienne (1) en générant une portance par des pales rotatives (200), l'ensemble de rotor (10) comprenant :
un arbre principal (100) relié à l'appareil de mobilité aérienne (1) et comportant une face circonférentielle ;
les pales (200) s'étendant à partir de la face circonférentielle ;
une unité de plateau oscillant (300), traversée par l'arbre principal (100), configurée pour se déplacer le long de l'arbre principal (100) et comprenant une première plaque (310) et une deuxième plaque (320), la première plaque (310) tournant grâce à sa liaison avec les pales (200) et la deuxième plaque (320) étant disposée en dessous de la première plaque (310), supportant la première plaque (310) et ne tournant pas ;
une connexion de pales (410) reliant les pales (200) à la première plaque (310) ; et
une unité de rappel en position (500), comprenant un premier corps élastique (510) disposé le long de l'arbre principal (100) au-dessus de l'unité de plateau oscillant (300) et un deuxième corps élastique (520) disposé le long de l'arbre principal (100) en dessous de l'unité de plateau oscillant (300) et configuré pour ajuster une position de l'unité de plateau oscillant (300).

2. Ensemble de rotor (10) selon la revendication 1, dans lequel le premier corps élastique (510) et le deuxième corps élastique (520) sont configurés pour générer des forces de rappel dans des directions opposées.

3. Ensemble de rotor (10) selon la revendication 1 ou 2, dans lequel le premier corps élastique (510) et le deuxième corps élastique (520) sont configurés pour générer une force de rappel dans une direction opposée à une direction de déplacement de l'unité de plateau oscillant (300).

4. Ensemble de rotor (10) selon l'une des revendications 1 à 3, dans lequel le premier corps élastique (510) et le deuxième corps élastique (520) sont configurés pour maintenir l'unité de plateau oscillant (300) dans une position de rappel prédéterminée le long de l'arbre principal (100).

5. Ensemble de rotor (10) selon la revendication 4, dans lequel la position de rappel est basée sur des longueurs et des modules d'élasticité du premier corps élastique (510) et du deuxième corps élastique (520).

6. Ensemble de rotor (10) selon l'une des revendications 1 à 5, comprenant en outre une unité d'entraînement (420) configurée pour fournir de la puissance pour ajuster une position de l'unité de plateau oscillant (300).

7. Appareil de mobilité aérienne (1) comprenant un ensemble de rotor selon l'une des revendications 1 à 6.
